# FASCICULE DE BREVET EUROPEEN

(11) **EP 1 716 929 B1**
(45) Date de publication et mention de la délivrance du brevet: **27.07.2011**
(21) Numéro de dépôt: 05290947.0
(22) Date de dépôt: 29.04.2005
(51) Int. Cl.: B05B 1/10, B60S 1/52

(54) **Gicleur de lave-projecteur ou de lave-vitre pour un véhicule automobile comportant un insert**
Scheibenwaschspritzdüse mit Einbauelement
Windshield washing nozzle with insert

(43) Date de publication de la demande: 02.11.2006
(73) Titulaire: VALEO VISION, 93012 Bobigny Cedex (FR)
(72) Inventeur: Dehaene, Guy, 93700 Drancy (FR)
(74) Mandataire: Tran, Chi-Hai

(56) Documents cités:
- DE-A1- 4 427 521
- FR-A- 1 164 630
- US-A- 4 244 521
- US-A1- 2003 234 303

## Description

L'invention concerne un gicleur de lave-projecteur ou de lave-vitre pour un véhicule automobile.

L'invention concerne plus particulièrement un gicleur de lave-projecteur ou de lave-vitre pour un véhicule automobile, du type qui comporte un corps sensiblement axial à l'intérieur duquel est agencé un conduit qui débouche à une extrémité libre du gicleur par l'intermédiaire d'un orifice de sortie, et du type dans lequel le conduit comporte au moins, d'amont en aval, un premier tronçon de diamètre élevé et un deuxième tronçon de diamètre réduit destiné à permettre la pulvérisation du liquide de lavage du projecteur.

DE 44 27 521 divulgue, en accord avec le préambule de la revendication 1, un tel gicleur.

On connaît de nombreux exemples de gicleurs de lave-projecteur ou de lave-vitre de ce type.

Selon une première conception connue, on connaît des gicleurs tubulaires résultant d'une conception monobloc moulée.

Un gicleur de ce type comporte à son extrémité un étranglement, formant le deuxième tronçon, qui communique directement avec l'orifice de sortie. Le deuxième tronçon doit être d'une dimension déterminée et il doit être agencé d'une manière très précise par rapport au premier tronçon pour pulvériser le liquide de lavage de manière adéquate.

Une telle conception pose de nombreux problèmes en termes de tolérances de moulage, le gicleur étant en effet une pièce de petite taille.

Selon une deuxième conception connue, on a remédié à cette conception en proposant un gicleur tubulaire comportant des formes moulées agrandies. Dans le conduit du gicleur tubulaire est inséré à force un insert tubulaire, qui comporte les premier et deuxième tronçons, et qui pulvérise le liquide de lavage dans le conduit du gicleur avant que celui ne soit évacué par l'orifice de sortie.

Le gicleur tubulaire est ainsi plus simple à réaliser, mais les tolérances de moulage de l'insert tubulaire rendent sa réalisation problématique. De plus, cette conception impose de réaliser un gicleur en deux parties, et il se pose alors le problème de l'étanchéité entre le corps du gicleur et l'insert tubulaire.

Pour remédier à cet inconvénient, l'invention propose une conception de gicleur de lave-projecteur ou de lave-vitre réalisé en au moins deux parties, et comprenant un corps et un insert de conception simple.

Dans ce but, l'invention propose un gicleur de lave-projecteur ou de lave-vitre du type décrit précédemment, caractérisé en ce que le deuxième tronçon est délimité d'une part par la surface interne du conduit et d'autre part au moins par une surface libre d'un insert qui est emboîté dans au moins une empreinte complémentaire de la paroi du conduit.

Selon d'autres caractéristiques de l'invention :
- le second tronçon est agencé à proximité de l'extrémité libre du gicleur, et le second tronçon comporte un moyen interne destiné à permettre la pulvérisation du liquide de lavage du projecteur à travers l'orifice de sortie,
- le deuxième tronçon comporte au moins une partie dans laquelle la distance entre la surface libre de l'insert et la surface interne du conduit est réduite de manière à former un étranglement formant le moyen interne destiné à permettre la pulvérisation du liquide de lavage du projecteur à travers l'orifice de sortie,
- l'insert est calibré lors de sa fabrication en grande série selon une forme géométrique simple et au moins la surface libre présente un rayon de courbure déterminé,
- l'extrémité libre du gicleur présente la forme d'un bulbe de révolution dans lequel est pratiqué un perçage d'axe radial qui communique avec le second tronçon et qui forme l'orifice de sortie, ledit bulbe comportant une surface interne conformée selon un rayon de courbure supérieur au rayon de courbure de l'insert pour former l'étranglement,
- l'insert présente une forme sphérique,
- l'insert présente une forme cylindrique d'orientation transversale par rapport à la direction du premier tronçon,
- l'insert présente une forme d'ogive orientée coaxialement avec la direction générale premier tronçon,
- le premier tronçon comporte un bouchon qui est inséré à force dans le premier tronçon et qui comporte une conduite permettant le passage du liquide de lavage vers le deuxième tronçon, l'insert est monté avec jeu dans le conduit de manière à être mobile, et l'insert comporte de surcroît un canal interne qui communique à une extrémité avec le premier tronçon et à son extrémité opposée avec l'orifice de sortie, pour permettre un réglage de la direction du jet du gicleur,
- le conduit comporte au moins une rainure qui est creusée tout le long de sa paroi jusqu'à l'orifice de sortie, qui détermine la paroi du second tronçon formée dans le conduit,
- la rainure comporte une branche principale qui traverse le premier tronçon et qui se divise en au moins deux branches symétriques dans le second tronçon et qui communiquent avec l'orifice de sortie,
- l'orifice de sortie est simple ou multiple selon que l'on désire obtenir un ou plusieurs jets,
- les branches symétriques, après leur division dans le second tronçon, rejoignent avant de communiquer avec l'orifice de sortie.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe d'un gicleur de lave-projecteur ou de lave-vitre selon un premier état antérieur de la technique ;
- la figure 2 est une vue en coupe d'un gicleur de lave-projecteur ou de lave-vitre selon un second état antérieur de la technique ;
- la figure 3 est une vue en coupe axiale d'un gicleur de lave-projecteur ou de lave-vitre selon un premier et un second modes de réalisation de l'invention ;
- la figure 4 est une vue en coupe par le plan 4-4 de la figure 3 du gicleur de lave-projecteur ou de lave-vitre selon le premier mode de réalisation de l'invention ;
- la figure 5 est une vue en coupe axiale d'un gicleur de lave-projecteur ou de lave-vitre selon un troisième mode de réalisation de l'invention ;
- la figure 6 est une vue coupe par un plan analogue au plan 4-4 de la figure 3 d'un gicleur de lave-projecteur ou de lave-vitre selon un quatrième mode de réalisation de l'invention ;
- la figure 7 est une vue en coupe axiale d'un gicleur de lave-projecteur ou de lave-vitre selon un cinquième mode de réalisation de l'invention.

Dans la description qui va suivre, des chiffres de référence identiques désignent des pièces identiques ou ayant des fonctions similaires.

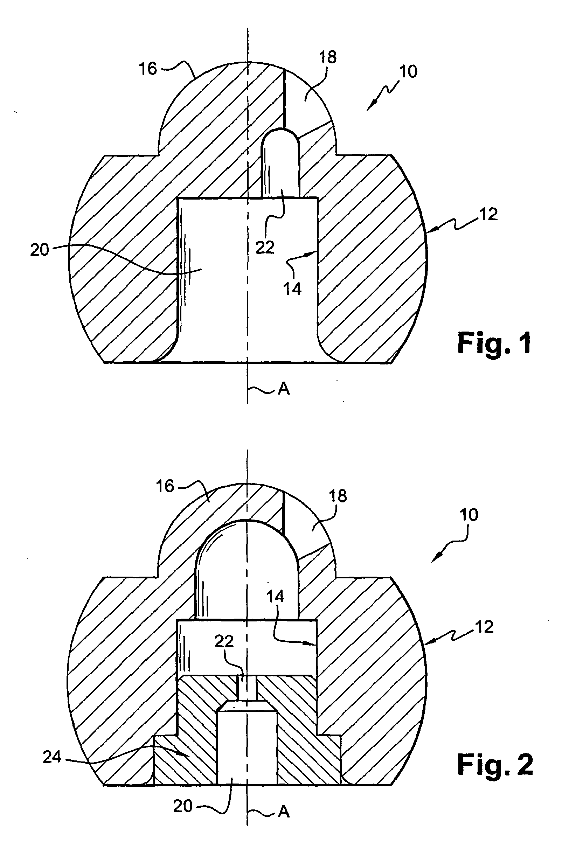

On a représenté aux figures 1 et 2 des gicleurs 10 de lave-projecteur ou de lave-vitre pour un véhicule automobile qui sont réalisés respectivement selon un premier et un second états antérieurs de la technique.

De manière connue, chaque gicleur 10 comporte un corps 12 tubulaire à symétrie axiale, par exemple cylindrique ou sphérique comme on l'a représenté, orienté sensiblement suivant une direction axiale "A". De manière connue, un conduit 14 est agencé à l'intérieur du corps 12. Ce conduit 14 débouche à une extrémité libre 16 du gicleur par l'intermédiaire d'un orifice 18 de sortie.

De manière connue, le conduit 14 comporte au moins, d'amont en aval, un premier tronçon 20 de diamètre élevé et un deuxième tronçon 22 de diamètre réduit qui est destiné à permettre la pulvérisation du liquide de lavage du projecteur.

Le gicleur 10 qui a été représenté à la figure 1 conformément au premier état antérieur de la technique résulte d'une conception monobloc moulée. Il comporte à son extrémité 16 un étranglement 22, formant le deuxième tronçon 22, qui communique directement avec l'orifice 18 de sortie. Le deuxième tronçon 22 doit être d'une dimension déterminée et il doit être agencé d'une manière très précise par rapport à l'orifice de sortie 18 pour pulvériser le liquide de lavage de manière adéquate au-delà de l'orifice de sortie.

Cette conception pose de nombreux problèmes en termes de tolérances de moulage, puisque, au cours du moulage, le noyau de moulage du deuxième tronçon doit être agencé dans une position déterminée par rapport au noyau du premier tronçon 20 et par rapport au noyau qui délimite l'orifice de sortie 18. Or le gicleur 10 est une pièce de petite taille, ce qui rend la mise en position des noyaux très problématique.

Le gicleur 10 qui a été représenté à la figure 2 résulte lui aussi d'une conception moulée. Toutefois, à la différence du gicleur 10 de la figure 1, le gicleur tubulaire 10 comporte un insert 24 tubulaire qui est inséré dans le conduit 14.

Cet insert 24 comporte les premier et deuxième tronçon 20, 22, et il est destiné à pulvériser le liquide de lavage dans le conduit 14 du gicleur en amont de l'orifice 18 de sortie. Le gicleur 10 tubulaire est ainsi plus simple à réaliser, mais les tolérances d'usinage ou de moulage de l'insert 24 tubulaire demeurent problématiques. De plus, cette conception impose de réaliser un gicleur 10 en deux parties, et il se pose alors le problème de l'étanchéité entre le corps 12 du gicleur 10 et l'insert 24 tubulaire.

Pour remédier à cet inconvénient, l'invention propose une conception de gicleur 10 de lave-projecteur ou de lave-vitre comportant au moins deux parties, notamment un corps 12 et un insert 26 de conception simple.

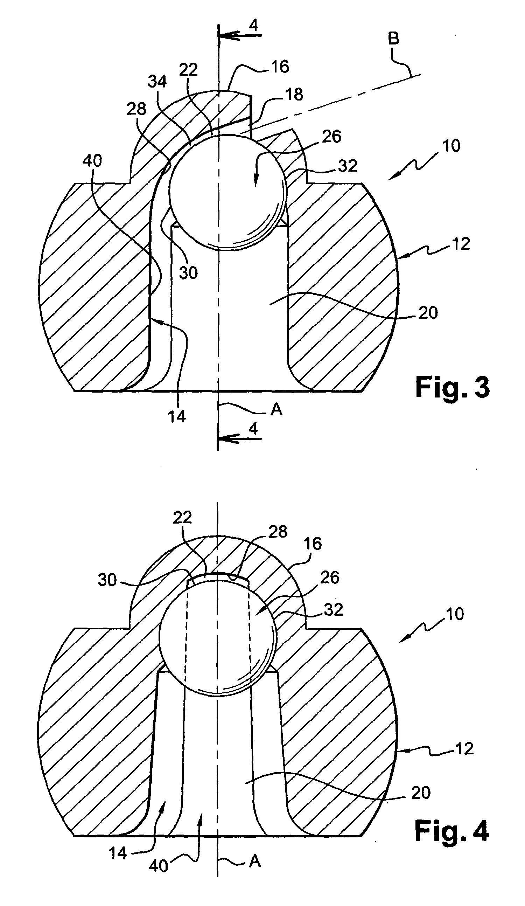

Dans ce but, comme l'illustrent les figures 3 à 7, l'invention propose un gicleur 10 de lave-projecteur ou de lave-vitre du type décrit précédemment, caractérisé en ce que le deuxième tronçon 22 est délimité d'une part par la surface interne 28 du conduit et d'autre part au moins par une surface libre 30 de l'insert 26, lequel insert 26 est emboîté dans au moins une empreinte 32 complémentaire formée dans la paroi du conduit 14.

Plus particulièrement, le second tronçon 22 est agencé à proximité de l'extrémité libre 16 du gicleur 10, et le second tronçon 22 comporte un moyen interne destiné à permettre la pulvérisation du liquide de lavage du projecteur à travers l'orifice 18 de sortie.

A cet effet, le deuxième tronçon 22 comporte au moins une partie 34 dans laquelle la distance entre la surface libre 30 de l'insert et la surface interne 28 du conduit 14 est réduite de manière à former un étranglement formant le moyen interne destiné à permettre la pulvérisation du liquide de lavage du projecteur à travers l'orifice 18 de sortie.

Dans les modes de réalisation préférés de l'invention qui ont été représentés aux figures 3 à 7, l'insert 26 est calibré lors de sa fabrication en grande série selon une forme géométrique simple. Au moins la surface libre 28 présente un rayon de courbure déterminé.

Comme on le verra dans la suite de la présente description, l'insert 26 est avantageusement une pièce ayant une forme de révolution autour d'un axe ou d'un point déterminé, présentant une courbure régulière.

De préférence, l'extrémité libre 16 du gicleur présente la forme d'un bulbe de révolution autour de l'axe "A" dans lequel est pratiqué un perçage d'axe sensiblement radial "B" qui communique avec le second tronçon 22 et qui forme l'orifice 18 de sortie. Ce bulbe 16 comporte une surface interne 28 conformée selon un rayon de courbure supérieur au rayon de courbure de l'insert 26 pour former l'étranglement. De la sorte, la pulvérisation du liquide de lavage est obtenue de manière très simple en déterminant la distance voulue entre la surface interne 28 du bulbe et la surface externe libre 30 de l'insert 26.

Selon un premier mode de réalisation qui a été représenté aux figures 3 et 4, l'insert 26 présente une forme sphérique. L'insert est donc par exemple obtenu à l'aide d'une simple bille d'acier aisément réalisable en grande série. Dans ce cas, l'empreinte complémentaire 32 présente la forme d'une portion concave de sphère.

L'insert 26 peut aussi, selon un second mode de réalisation qui peut aussi être vu à la figure 1, présenter une forme cylindrique d'orientation transversale par rapport à la direction "A" du premier tronçon 20. Dans ce cas, l'insert 26 peut être obtenu très simplement à partir d'un rouleau d'axe perpendiculaire au plan de la figure 2. L'empreinte 32 présente alors la forme d'une portion concave de cylindre.

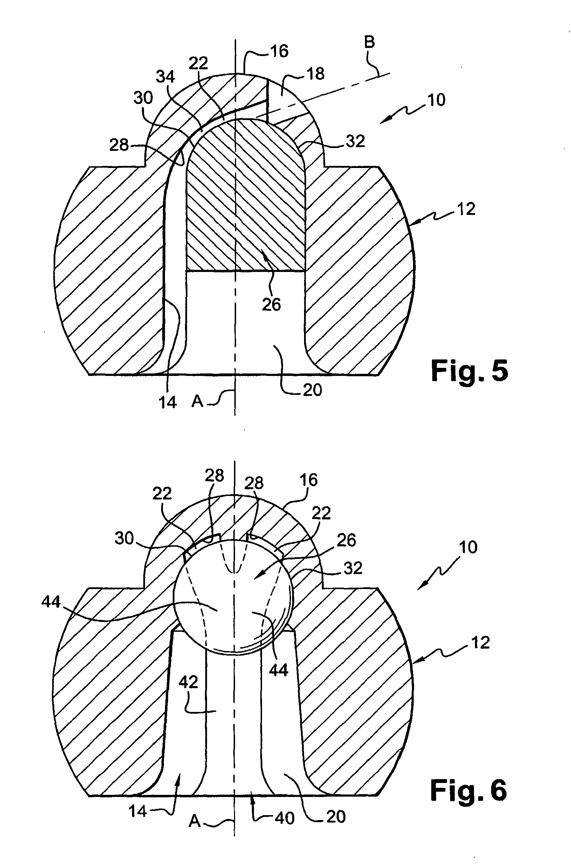

Selon un troisième mode de réalisation qui a été représenté à la figure 5, l'insert 26 présente une forme d'ogive orientée coaxialement avec la direction générale "A" du premier tronçon 20. L'empreinte 32 présente une forme complémentaire.

Avantageusement, dans les premier à troisième modes de réalisation, le conduit 14 comporte au moins une rainure 40 qui est creusée tout le long de sa paroi jusqu'à l'orifice 18 de sortie, et notamment le long de la paroi du second tronçon 22 qui est formée par la paroi 28 du conduit. Cette rainure détermine la paroi 28 interne du deuxième tronçon formée par le conduit 14 et elle permet d'obtenir un jet canalisé de liquide de lavage.

Cette rainure 40 peut être simple comme représentée aux figures 3 et 4, de manière à provoquer l'apparition d'un jet unique de liquide de lavage, comme on l'a représenté aux figures 3 et 4.

En variante la rainure 40 peut permettre d'obtenir deux jets de lavage, comme représenté à la figure 6.

A cet effet, la rainure 40 présente la forme d'un "Y", dont la branche principale 42 traverse le premier tronçon 20 et dont les branches symétriques 44 se divisent dans le second tronçon 22 et communiquent avec l'orifice 18 de sortie. La branche principale 42 de la rainure 40 peut se diviser en un nombre de branches symétriques supérieur à deux, chacune communiquant avec l'orifice de sortie 18.

Selon une variante (non représentée), l'orifice de sortie 18 pourra être simple ou multiple selon que l'on désire obtenir un ou plusieurs jets.

Selon une autre variante (non représentée), les branches symétriques 44, après leur division dans le second tronçon 22, peuvent se rejoindre avant de communiquer avec l'orifice de sortie 18, simple ou multiple.

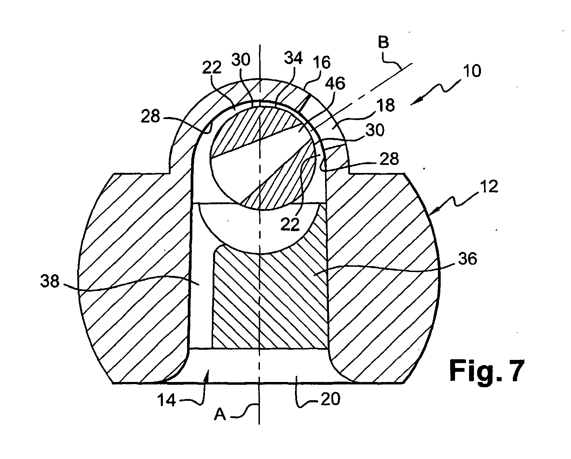

Dans un quatrième mode de réalisation en variante de l'invention qui a été représenté à la figure 7, le premier tronçon 20 comporte un bouchon 36 qui est inséré à force dans le premier tronçon 20 et qui comporte une conduite 38 permettant le passage du liquide de lavage vers le deuxième tronçon 22.

L'insert 30 est monté avec jeu dans le conduit 14 de manière à être mobile, et il comporte de surcroît un canal interne 46 qui communique à une extrémité avec le premier tronçon 20 et à son extrémité opposée avec l'orifice 18 de sortie. Cette configuration permet avantageusement une oscillation rapide du jet dans l'orifice de sortie 18.

L'invention permet donc de réaliser de manière simple un gicleur de lave-projecteur ou de lave-vitre apte à pulvériser efficacement un jet de liquide de lavage. Comme décrit plus haut, elle se caractérise par un insert de préférence de forme géométrique simple (du type sphère), et de préférence une forme pleine, sans cavité ni creux, ce qui garantit un fonctionnement robuste du gicleur. Cet insert peut être introduit dans le conduit par l'une de ses extrémités sans difficultés ni nécessiter de faire des ouvertures latérales dans le conduit, ce qui facilite le montage des différents composants du gicleur et simplifie globalement sa conception. L'association de l'insert dans le conduit se fait à la manière d'un trou borgne. La forme de l'insert permet de calibrer et de sélectionner la forme du jet d'eau émis par le gicleur.

## Revendications

1. Gicleur (10) de lave-projecteur ou de lave-vitre pour un véhicule automobile, du type qui comporte un corps (12) sensiblement axial à l'intérieur duquel est agencé un conduit (14) qui débouche à une extrémité libre (16) du gicleur (10) par l'intermédiaire d'un orifice (18) de sortie, et du type dans lequel le conduit (14) comporte au moins, d'amont en aval, un premier tronçon (20) de diamètre élevé et un deuxième tronçon (22) comportant un insert (26), de diamètre réduit destiné à permettre la pulvérisation du liquide de lavage du projecteur,
**caractérisé en ce que** le deuxième tronçon (22) est délimité d'une part par la surface interne (28) du conduit (14) et d'autre part au moins par une surface libre (30) d'un insert (26) qui est emboîté dans au moins une empreinte (32) complémentaire de la paroi du conduit (14), et l'insert (26) est calibré lors de sa fabrication en grande série selon une forme géométrique simple et en qu'au moins la surface libre (30) présente un rayon de courbure déterminé.

2. Gicleur (10) de lave-projecteur ou de lave-vitre selon la revendication précédente, **caractérisé en ce que** le second tronçon (22) est agencé à proximité de l'extrémité libre (16) du gicleur (10), et **en ce que** le second tronçon (22) comporte un moyen interne destiné à permettre la pulvérisation du liquide de lavage du projecteur à travers l'orifice (18) de sortie.

3. Gicleur (10) de lave-projecteur ou de lave-vitre selon la revendication précédente, **caractérisé en ce que** le deuxième tronçon (22) comporte au moins une partie (34) dans laquelle la distance entre la surface libre (30) de l'insert (26) et la surface interne (28) du conduit (14) est réduite de manière à former un étranglement formant le moyen interne destiné à permettre la pulvérisation du liquide de lavage du projecteur à travers l'orifice (18) de sortie.

4. Gicleur (10) de lave-projecteur ou de lave-vitre selon les revendications 1 et 3 prises en combinaison, **caractérisé en ce que** l'extrémité (16) libre du gicleur présente la forme d'un bulbe de révolution dans lequel est pratiqué un perçage d'axe radial (B) qui communique avec le second tronçon (22) et qui forme l'orifice (18) de sortie, ledit bulbe comportant une surface interne (28) conformée selon un rayon de courbure supérieur au rayon de courbure de l'insert (26) pour former l'étranglement.

5. Gicleur (10) de lave-projecteur ou de lave-vitre selon l'une des revendications 1 ou 4, **caractérisé en ce que** l'insert (26) présente une forme sphérique.

6. Gicleur (10) de lave-projecteur ou de lave-vitre selon l'une des revendications 1 ou 4, **caractérisé en ce que** l'insert (26) présente une forme cylindrique d'orientation transversale par rapport à la direction générale du premier tronçon (20).

7. Gicleur (10) de lave-projecteur ou de lave-vitre selon l'une des revendications 1 ou 4, **caractérisé en ce que** l'insert (26) présente une forme d'ogive orientée coaxialement avec la direction générale du premier tronçon (20).

8. Gicleur (10) de lave-projecteur ou de lave-vitre selon l'une quelconque des revendications 5 ou 6, **caractérisé en ce que** le premier tronçon (20) comporte un bouchon (36) qui est inséré à force dans le premier tronçon (20) et qui comporte une conduite (38) permettant le passage du liquide de lavage vers le deuxième tronçon (22), **en ce que** l'insert (30) est monté avec jeu dans le conduit (14) de manière à être mobile, et **en ce que** l'insert (30) comporte de surcroît un canal interne (46) qui communique à une extrémité avec le premier tronçon (20) et à son extrémité opposée avec l'orifice (18) de sortie, pour permettre une oscillation de la direction du jet du gicleur.

9. Gicleur (10) de lave-projecteur ou de lave-vitre selon l'une quelconque des revendications 1 à 7, **caractérisé en ce que** le conduit (14) comporte au moins une rainure (40) qui est creusée tout le long de sa paroi jusqu'à l'orifice de sortie, et qui détermine la paroi (28) du second tronçon (22) formée dans le conduit (14).

10. Gicleur (10) de lave-projecteur ou de lave-vitre selon la revendication précédente, **caractérisé en ce que** la rainure (40) comporte une branche principale (42) qui traverse le premier tronçon (20) et qui se divise en au moins deux branches symétriques (44) dans le second tronçon (22) et qui communiquent avec l'orifice (18) de sortie.

11. Gicleur (10) de lave-projecteur ou de lave-vitre selon la revendication 9 ou 10, **caractérisé en ce que** l'orifice de sortie (18) est simple ou multiple selon que l'on désire obtenir un ou plusieurs jets.

12. Gicleur (10) de lave-projecteur ou de lave-vitre selon l'une des revendications 9 à 11, **caractérisé en ce que** les branches symétriques (44), après leur division dans le second tronçon (22), rejoignent avant de communiquer avec l'orifice de sortie (18).

## Claims

1. Nozzle (10) for a headlight washer or a glass washer for a motor vehicle, of the type which comprises a substantially axial body (12), inside which there is arranged a duct (14) which opens at a free end (16) of the nozzle (10) via an output aperture (18), and of the type wherein the duct (14) comprises at least, from upstream to downstream, a first section (20) with a large diameter, and a second section (22) comprising an insert (26), with a reduced diameter, which is designed to permit spraying of the headlight washing fluid,
**characterised in that** the second section (22) is delimited firstly by the inner surface (28) of the duct (14), and secondly at least by a free surface (30) of a insert (26), which is fitted in at least one complementary recess (32) in the wall of the duct (14), and the insert (26) is calibrated during its mass production according to a simple geometric form, and **in that** at least the free surface (30) has a predetermined radius of curvature.

2. Nozzle (10) for a headlight washer or a glass washer according to the preceding claim, **characterised in that** the second section (22) is arranged in the vicinity of the free end (16) of the nozzle (10), and **in that** the second section (22) comprises an inner means which is designed to permit spraying of the headlight washing fluid via the output aperture (18).

3. Nozzle (10) for a headlight washer or a glass washer according to the preceding claim, **characterised in that** the second section (22) comprises at least one part (34) in which the distance between the free surface (30) of the insert (26) and the inner surface (28) of the duct (14) is reduced such as to form a throat which forms the inner means which is designed to permit spraying of the headlight washing fluid via the output aperture (18).

4. Nozzle (10) for a headlight washer or a glass washer according to claims 1 and 3 taken in combination, **characterised in that** the free end (16) of the nozzle is in the form of a bulb of revolution, in which there is provided a bore (B) with a radial axis, which communicates with the second section (22), and forms the output aperture (18), the said bulb comprising an inner surface (28) which is formed according to a radius of curvature larger than the radius of curvature of the insert (26), in order to form the throat.

5. Nozzle (10) for a headlight washer or a glass washer according to one of claims 1 or 4, **characterised in that** the insert (26) has a spherical form.

6. Nozzle (10) for a headlight washer or a glass washer according to one of claims 1 or 4, **characterised in that** the insert (26) has a cylindrical form with orientation which is transverse relative to the general direction of the first section (20).

7. Nozzle (10) for a headlight washer or a glass washer according to one of claims 1 or 4, **characterised in that** the insert (26) has the form of an ogive which is oriented coaxially to the general direction of the first section (20).

8. Nozzle (10) for a headlight washer or a glass washer according to either of claims 5 or 6, **characterised in that** the first section (20) comprises a stopper (36) which is forced into the first section (20), and comprises a duct (38) which permits the passage of the washing fluid to the second section (22), **in that** the insert (30) is fitted with play in the duct (14) such as to be mobile, and **in that** the insert (30) additionally comprises an inner channel (46) which communicates at one end with the first section (20), and at its opposite end with the output aperture (18), in order to permit oscillation of the direction of the nozzle jet.

9. Nozzle (10) for a headlight washer or a glass washer according to any one of claims 1 to 7, **characterised in that** the duct (14) comprises at least one groove (40), which is hollowed along its entire wall as far as the output aperture, and determines the wall (28) of the second section (22) formed in the duct (14).

10. Nozzle (10) for a headlight washer or a glass washer according to the preceding claim, **characterised in that** the groove (40) comprises a main branch (42) which passes through the first section (20), and is divided into at least two symmetrical branches (44) in the second section (22), which communicate with the output aperture (18).

11. Nozzle (10) for a headlight washer or a glass washer according to claim 5 or 10, **characterised in that** the output aperture (18) is simple or multiple, according to whether one or a plurality of jets are to be obtained.

12. Nozzle (10) for a headlight washer or a glass washer according to one of claims 9 to 11, **characterised in that**, after being divided in the second section (22), the symmetrical branches (44) rejoin, before communicating with the output aperture (18).

## Patentansprüche

1. Düse (10) einer Scheinwerfer- oder Scheibenreinigungsanlage für ein Kraftfahrzeug, des Typs mit einem im Wesentlichen axialen Körper (12), in dessen Inneren eine Leitung (14) angeordnet ist, die an einem freien Ende (16) der Düse (10) mittels einer Austrittsöffnung (18) mündet, und des Typs, bei dem die Leitung (14) zwischen Eintrittsseite und Austrittsseite wenigstens einen ersten Abschnitt (20) mit großem Durchmesser und einen ein Einsatzstück (26) umfassenden zweiten Abschnitt (22) mit verringertem Durchmesser aufweist, der das Zerstäuben der Scheinwerferreinigungsflüssigkeit erlaubt,
**dadurch gekennzeichnet, dass** der zweite Abschnitt (22) einerseits von der Innenfläche (28) der Leitung (14) und andererseits von wenigstens einer freien Fläche (30) des Einsatzstücks (26) begrenzt ist, das in wenigstens eine komplementäre Höhlung (32) der Wand der Leitung (14) eingesteckt ist, und das Einsatzstück (26) bei seiner Großserienfertigung gemäß einer einfachen geometrischen Form kalibriert wird und wenigstens die freie Fläche (30) einen bestimmten Krümmungsradius aufweist.

2. Düse (10) einer Scheinwerfer- oder Scheibenreinigungsanlage nach dem vorhergehenden Anspruch,
**dadurch gekennzeichnet, dass** der zweite Abschnitt (22) in der Nähe des freien Endes (16) der Düse (10) angeordnet ist, und dass der zweite Abschnitt (22) ein internes Mittel umfasst, das das Zerstäuben der Scheinwerferreinigungsflüssigkeit durch die Austrittsöffnung (18) erlaubt.

3. Düse (10) einer Scheinwerfer- oder Scheibenreinigungsanlage nach dem vorhergehenden Anspruch,
**dadurch gekennzeichnet, dass** der zweite Abschnitt (22) wenigstens einen Teil (34) umfasst, bei dem der Abstand zwischen der freien Fläche (30) des Einsatzstücks (26) und der Innenfläche (28) der Leitung (14) solchermaßen verringert ist, dass eine Verengung gebildet wird, die das interne Mittel bildet, welches das Zerstäuben der Scheinwerferreinigungsflüssigkeit durch die Austrittsöffnung (18) erlaubt.

4. Düse (10) einer Scheinwerfer- oder Scheibenreinigungsanlage nach den Ansprüchen 1 und 3 in Verbindung miteinander,
**dadurch gekennzeichnet, dass** das freie Ende (16) der Düse die Form einer rotationssymmetrischen Verdickung hat, in der eine Bohrung mit radialer Achse (B) ausgebildet ist, die mit dem zweiten Abschnitt (22) verbunden ist und die Austrittsöffnung (18) bildet, wobei die Verdickung eine Innenfläche (28) aufweist, die mit einem Krümmungsradius ausgebildet ist, der größer ist als der Krümmungsradius des Einsatzstücks (26) zum Bilden der Verengung.

5. Düse (10) einer Scheinwerfer- oder Scheibenreinigungsanlage nach einem der Ansprüche 1 oder 4,
**dadurch gekennzeichnet, dass** das Einsatzstück (26) kugelförmig ist.

6. Düse (10) einer Scheinwerfer- oder Scheibenreinigungsanlage nach einem der Ansprüche 1 oder 4,
**dadurch gekennzeichnet, dass** das Einsatzstück (26) eine bezüglich der allgemeinen Richtung des ersten Abschnitts (20) querverlaufende zylindrische Form hat.

7. Düse (10) einer Scheinwerfer- oder Scheibenreinigungsanlage nach einem der Ansprüche 1 oder 4,
**dadurch gekennzeichnet, dass** das Einsatzstück (26) eine spitzbogige Form hat, die koaxial zur allgemeinen Richtung des ersten Abschnitts (20) verläuft.

8. Düse (10) einer Scheinwerfer- oder Scheibenreinigungsanlage nach einem der Ansprüche 5 oder 6,
**dadurch gekennzeichnet, dass** der erste Abschnitt (20) einen Verschluss (36) aufweist, der in den ersten Abschnitt (20) hineingedrückt ist und eine Leitung (38) umfasst, die das Durchleiten der Reinigungsflüssigkeit zu dem zweiten Abschnitt (22) erlaubt, dass das Einsatzstück (26) mit Spiel solchermaßen in die Leitung (14) eingesetzt ist, dass es beweglich ist, und dass das Einsatzstück (26) überdies einen Innenkanal (46) aufweist, der an einem Ende mit dem ersten Abschnitt (20) und an seinem entgegengesetzten Ende mit der Austrittsöffnung (18) verbunden ist, um ein Hin- und Herbewegen des Sprühstrahls der Düse zu erlauben.

9. Düse (10) einer Scheinwerfer- oder Scheibenreinigungsanlage nach einem der Ansprüche 1 bis 7,
**dadurch gekennzeichnet, dass** die Leitung (14) wenigstens eine Einkerbung (40) aufweist, die über die gesamte Wandlänge bis zur Austrittsöffnung ausgekehlt ist und die Wand (28) des zweiten Abschnitts (22), der in der Leitung (14) ausgebildet ist, festlegt.

10. Düse (10) einer Scheinwerfer- oder Scheibenreinigungsanlage nach dem vorhergehenden Anspruch,
**dadurch gekennzeichnet, dass** die Einkerbung (40) einen Hauptzweig (42) aufweist, der den ersten Abschnitt (20) durchquert und sich im zweiten Abschnitt (22) in wenigstens zwei symmetrische Zweige (44) teilt, die mit der Austrittsöffnung (18) verbunden sind.

11. Düse (10) einer Scheinwerfer- oder Scheibenreinigungsanlage nach Anspruch 9 oder 10,
**dadurch gekennzeichnet, dass** die Austrittsöffnung (18) einfach oder mehrfach ist, je nach dem, ob ein oder mehrere Sprühstrahlen erzielt werden sollen.

12. Düse (10) einer Scheinwerfer- oder Scheibenreinigungsanlage nach einem der Ansprüche 9 bis 11,
**dadurch gekennzeichnet, dass** sich die symmetrischen Zweige (44) nach ihrer Teilung im zweiten Abschnitt (22) vor ihrer Verbindung mit der Austrittsöffnung (18) wieder vereinigen.
